Europäisches Patentamt

(19) European Patent Office

Office européen des brevets

(11) Publication number: **0 057 178**
**B1**

(12) **EUROPEAN PATENT SPECIFICATION**

(45) Date of publication of patent specification: **23.07.86**

(21) Application number: **80902165.2**

(22) Date of filing: **05.08.80**

(86) International application number:
**PCT/HU80/00002**

(87) International publication number:
**WO 81/01903 09.07.81 Gazette 81/16**

(51) Int. Cl.⁴: **G 11 B 5/48,** G 11 B 21/04,
G 11 B 25/04

(54) **A METHOD FOR RECORDING TRACK MARKING INFORMATION ON FLEXIBLE MAGNETICAL INFORMATION CARRIER DISCS AND APPARATUS FOR FINE ADJUSTMENT OF THE POSITION OF A READING HEAD.**

(43) Date of publication of application:
**11.08.82 Bulletin 82/32**

(45) Publication of the grant of the patent:
**23.07.86 Bulletin 86/30**

(84) Designated Contracting States:
**AT CH DE FR GB LI LU NL SE**

(56) References cited:
**EP-A-0 005 966**
**FR-A-2 347 742**
**GB-A-1 296 730**
**GB-A-1 446 255**
**US-A-3 185 972**
**US-A-3 404 392**
**US-A-3 838 457**
**US-A-3 840 893**
**US-A-3 864 740**
**US-A-3 864 741**
**US-A-3 924 268**
**US-A-4 027 338**

**IBM TECHNICAL DISCLOSURE BULLETIN, vol. 4, no. 5, October 1961, NEW YORK (US), G.N. TSILIBES: "Transducer position sensor", pages 24-25**

(73) Proprietor: **BUDAPESTI RADIOTECHNIKAI GYAR**
**Polgár u. 8-10. P.O.B. 43**
**H-1300 Budapest (HU)**

(72) Inventor: **JANOSI, Marcell**
**Orom u. 14**
**H-1016 Budapest (HU)**

(74) Representative: **Boon, Graham Anthony et al Elkington and Fife High Holborn House 52/54 High Holborn**
**London, WC1V 6SH (GB)**

(56) References cited:

**IBM TECHNICAL DISCLOSURE BULLETIN, vol. 20, no. 10, March 1978, NEW YORK (US), F.E. MUELLER: "Dual frequency servo-positioning system employing saturated recording", pages 4110-4111**

## Description

The present invention relates to a method for recording track marking information on flexible magnetical information carrier discs and to an apparatus for fine adjustment of the position of a reading head.

The method and apparatus according to the invention is generally applicable in mini-floppy and micro-floppy information recording systems, or in casette-systems with flexible magnetical discs, in which the excentricity of the concentrical recording tracks is smaller than the permissible track adjusting error. The present invention facilitates the adjustment of the reading head to the information carrying tracks.

In the field of floppy technique the positioning and retrieval of circular information recording tracks is solved in such a way that concentrical and circular guiding tracks are recorded on the rear side of the circular information recording disc with an appropriate track density (e.g. 500 tracks per inch). The information recording occurs in the first side of the disc during the reading of the corresponding rear guiding tracks, and a suitable servo-mechanical system controls the position of the reading-writing head in accordance with the guiding track. The guiding tracks are used in the same way when information is read out from the disc.

In this conventional head-adjusting system a first disadvantage lies in that a complete side of the disc is not used for recording useful information but only for track-guiding. A further drawback lies in that simultaneously at both sides of the disc respective writing-reading heads should be moved. The two heads are separated by the rotating disc lying therebetween, and a precisely adjustable mechanical link must be provided between the heads which must keep the relative position of the heads unchanged during adjustments.

Such a double-sided access to the disc and the simultaneous precise adjustment of the heads raises increased difficulties in case of magnetical information recording discs placed in respective casette casings because the presence of the closed casette renders the double-sided disc access to be difficult. Apart from a number of advantages such information recording magnetical casette disc systems have not gained wide acceptance, mostly due to the problems connected with track guiding.

It is an apparent advantage of the aforesaid conventional systems using guiding tracks that its track control can compensate the accuracy errors originating from the excentricity of the circular tracks and from the thermal deformation of the disc.

It has been proposed in EP—A—0005966 to provide an apparatus for fine adjustment of the position of a reading head associated with a flexible magnetic information carrier disc relative to circular information recording tracks of the disc, in which each of said tracks has a track-marking portion on which is recorded a marking frequency, said apparatus comprising a circuit selectively responsive to said marking frequency and coupled to said reading head for providing an output signal proportional to the amplitudes of the marking frequency components of signals read out by said reading head, and a control unit which in response to said output signal adjusts the radial position of said reading head. In this apparatus each track-guiding sector is split into two segments which extend side by side, each segment carrying different frequency. The pair of frequencies used are the same for every segment. A plurality of such sectors are provided in each track and the adjustment of the head is carried out while the head is between the track-guiding sectors. This requires relatively complex circuitry and also requires special formatting of discs before they can be used.

According to the present invention there is provided an apparatus for fine adjustment of the position of a reading head associated with a flexible magnetic information carrier disc relative to circular information recording tracks of the disc, in which each of said tracks has a track-marking portion on which is recorded a marking frequency, said apparatus comprising a circuit selectively responsive to said marking frequency and coupled to said reading head for providing an output signal proportional to the amplitudes of the marking frequency components of signals read out by said reading head, and a control unit which in response to said output signal adjusts the radial position of said reading head, characterized in that the track marking portion of each track comprises a track-marking sector having at most about 30° angular extent, the frequency value of the frequency of each track-marking sector is distinguishable from that of the frequency recorded on the neighbouring tracks, and the control unit is arranged to adjust the radial position of said reading head while the head is in the track-marking sector to control said output signal to a maximum which is associated with said frequency value of the track to which fine adjustment should be made.

The invention further provides a method of recording track-marking information on circular tracks of a flexible magnetic information-carrying disc, comprising the steps of recording information on information-carrying portions of the tracks, and recording a marking frequency on the remaining track-marking portions of the tracks, characterized in that the information carrying portion of each track comprises an information-carrying sector having an angular extent of at least about 330°, and the track-marking portion of each track comprises a track-marking sector which thus occupies at most about 30° of said track, each track comprising a specific marking frequency distinguishable from the marking frequency of the neighbouring tracks.

In a preferred embodiment of the invention in each even-numbered track a first common marking frequency and in each odd-numbered track a second common marking frequency is recorded, the first and second frequencies being different from one another.

The apparatus according to the invention preferably comprises a circuit which has a first selector that selects the first marking frequency component from the playback signal of the reading head and provides a direct current output signal proportional to the amplitude of this component, a second selector that selects the second marking frequency component from the playback signal of the reading head and provides a direct current output signal proportional to the amplitude of this second component, a first differential amplifier having a pair of inputs coupled to the outputs of the first and second selectors and provides an output voltage representing the difference of the two direct current input voltages.

The control unit of the apparatus according to the invention comprises preferably a second differential amplifier having a first input coupled to the output of the first differential amplifier, a reference signal forming unit having an output connected to the second input of the second differential amplifier and supplies a reference voltage associated with the predetermined track to which adjustment should be made, and an adjusting means which, depending on the output signal of the second differential amplifier, adjusts the radial position of the reading head.

When using the method according to the invention, the presence of the track marking sectors with an angular width falling between about 15° and 30° takes some percent of the useful information recording area, but the corresponding losses are compensated by the fact that the rear side of the disc will be free for information recording and only a single head is required which substantially simplifies the constructional design.

The invention will now be described in connection with some preferable embodiments, in which reference will be made to the accompanying drawings.

Fig. 1 shows the schematical top view of a flexible magnetical information recording disc with tracks of enlarged width;

Fig. 2 shows the block diagram of a preferred embodiment of the apparatus according to the invention with schematically illustrated enlarged tracks in front of the reading head;

Fig. 3 shows the output voltage of the first differential amplifier of Fig. 2 as a function of the radial displacement of the head; and

Fig. 4 shows the sectional elevational view of a hub disc for centrally fixing the flexible magnetical disc.

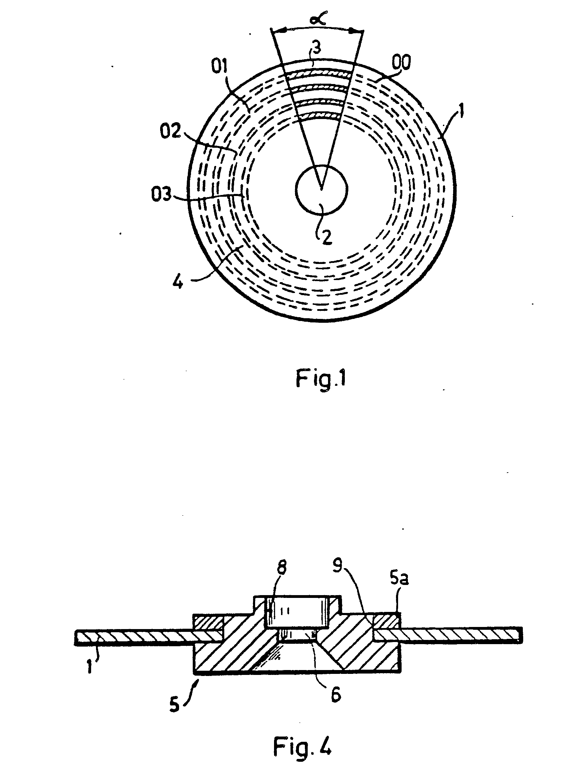

Fig. 1 shows an information recording disc 1 of magnetical material, which is similar to the discs used in mini-floppy systems. The accurate central mounting of the disc 1 is provided by means of its central bore 2. There are circular information recording tracks on the disc 1, and of these four neighbouring tracks 00, 01, 02 and 03 are illustrated in an enlarged scale in Fig. 1. In each track there is provided a track marking sector 3 having an angular width α for recording a suitable marking frequency signal as it will be explained later. Within certain constructional limits the value of the angle α can be chosen optionally, and this value falls preferably between 15° and 30°. The remaining information carrying sectors 4 of the tracks (shown with dashed lines in Fig. 1) comprise useful information recorded in the form of binary ones and zeros.

The role of the marking frequencies recorded in the track marking sectors is to distinguish any particular track from the adjacent ones. If a respective common marking frequency is recorded in the track marking sectors 3 of every second track, then the above condition is satisfied because it will be valid for any track that the marking frequency recorded on the two neighbouring tracks will be different from that of the particular track in question. Taking into account that in the information carrying sectors the recorded information is a sequence of frequency signals representing the bits "1" and "0", respectively, it will be preferable to use the same frequency signals as marking frequency signals. For example, in that case the marking frequency recorded on each track with even track number (counted from the perimeter towards the center) can correspond to the frequency of the bits "0", and that which is recorded on each track with odd track number can correspond to the frequency of the bits "1", or vice-versa.

Referring now to Fig. 2 showing a reading head 10 which is located in front (or above) of the tracks 00, 01, 02 and 03 shown in an enlarged scale, and the head 10 is precisely adjustable along arrow 11 designating the radial direction of the disc 1. The reading head 10 is generally a combined reading-writing head. A precise position adjusting means 12 is shown that adjusts the radial position of the head 10. It has not been illustrated but it is widely known that the coarse position adjustment of the head is provided by a separate head positioning assembly (with an adjusting accuracy of about 0.5—0.75 track width), and the precise position adjusting means 12 is capable of adjusting the position of the head relative to that assembly.

The output of the reading head 10 is coupled to a reading amplifier 13 and the output of this latter is connected to the input of a selective circuit consisting of a first frequency selector 14 and of a second frequency selector 15. The first frequency selector 14 is selective to the first marking frequency component of the read out signal and it provides an output direct current signal having a voltage corresponding to the amplitude of the first marking frequency component. The second frequency selector 15 has a similar design, but it is selective to the second marking frequency components. The outputs of the first and second frequency selectors 14 and 15 are coupled to respective inputs of a first differential amplifier 16, the output of which being connected to a first input of a second differential amplifier 17. The second differential amplifier 17 has a second input and it is connected to a reference signal forming circuit 18 that supplies a direct current reference level to the second differential amplifier 18 associated with the actual marking frequency of the particular track to which adjustment should be made.

The output of the second differential amplifier 17 is coupled to a control amplifier 19, which in response to its input signal provides a sufficiently amplified driving signal with appropriate sign for the precise position adjusting means 12.

The operation of the apparatus shown in Fig. 2 is as follows. In the position shown in the drawing the reading head 10 permanently receives the first and second marking frequencies when it is opposite to the track marking sector 3 of the disc 1. Supposing that the reading head 10 is closer to the track 01 than to the adjacent track 00, the signals recorded with the second marking frequency $f_2$ generate a higher voltage in the head than the signals of the first marking frequency $f_1$. The first and second frequency selectors 14 and 15, comprising both a tuned band amplifier and a rectifier, provide direct current voltage signals at their outputs that correspond to the respective marking frequency components. The two inputs of the first differential amplifier 16 are driven by voltages $|U_{f1}|$ and $|U_{f2}|$, wherein

$|U_{f1}|$ designates the absolute value of the first marking frequency component $f_1$, and
$|U_{f2}|$ designates the absolute value of the second marking frequency component $f_2$.

The voltage U on the output of the differential amplifier 16 is the difference of the above two signals:

$$U = |U_{f1}| - |U_{f2}|.$$

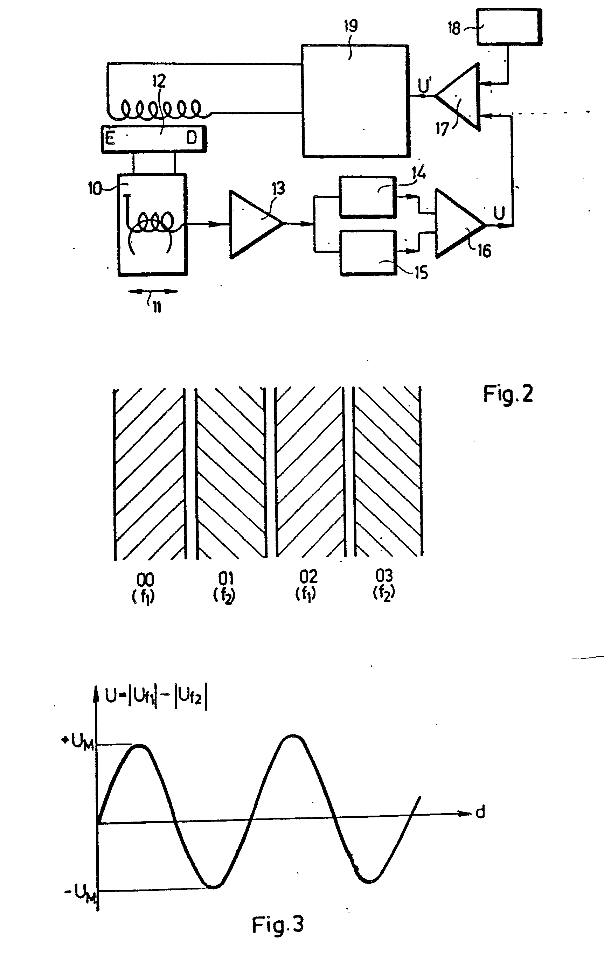

Fig. 3 shows the curve of the voltage U as a function of the radial displacement $d$ of the reading head 10. It can be seen that when the reading head 10 is in position opposite to the evennumbered tracks 00 and 02, then the value of the voltage U is at a positive maximum $+U_M$. When the reading head is in positions opposite to the odd-numbered tracks 01 and 03, thenhthe voltage U will be at negative maximums $-U_M$.

Depending on the particular track to which the adjustment of the reading head 10 should be made, the reference signal forming unit 18 supplies a reference signal of $+U_M$ or $-U_M$ to the second input of the second differential amplifier 17. In the example illustrated in Fig. 2 the position of the reading head 10 should be adjusted to the second track 01. For such an adjustment a reference voltage of $-U_M$ should be provided for the second differential amplifier 17. Depending on the difference between the actual voltage U and the preset reference value $-U_M$, the control amplifier 19 will provide a driving voltage to the precise position adjusting means 12. Obviously, this latter will change the radial position of the reading head 10 until it will be just opposite to the centre of the track 01. In this position the control voltage will be zero. The control amplifier 19 comprises an appropriate differentiating member which senses the sign (i.e. direction) of the control process. When the control occurs with a correct sign, the control voltage should be of decreasing character in time. When the differentiating member senses a sign that would move the reading head 10 away from the correct position instead of towards to it, then it activates an appropriate switch for changing the sign of the output voltage of the control amplifier 19.

The control process according to the invention is sufficiently effective to bring the reading head 10 into the correct position relative to the required track during the period in which the reading head 10 reads the track marking sector 3.

The above described arrangement is therefore capable of positioning the reading head following a preliminary coarse adjustment.

Now the technical limits of the proposed way of head adjustment will be analyzed from which the track density can be determined.

The above described control systems cannot offer protection against the deviations of the information carrying tracks on the disc 1 from the idealistic geometrically circular path, because the control is carried out only in a small sector of the whole path. Any excentricity of the tracks results in an inaccurate positioning (offset) of the reading head relative to the centre of the track. Such excentricity error may arise:

a) from the excentricity of the driving shaft (not shown in the drawing) that drives the disc 1;

b) from the excentricity of the central bore 2 of the disc 1; and

c) from the excentricity caused by the non-even thermical dilatation of the disc when unevenly distributed heat is applied to the disc.

When the maximum permitted excentricity is arbitrarily chosed to a value corresponding to about 15% of the radial distance (spacing) between adjacent tracks, then this amount of excentricity cannot cause noticeable playback or recording errors. Practical tests have shown that with accuracies or tolerance ranges used widely in the field of mini-floppy technique the maximum value of the expectable excentricity if about 12.6 $\mu$m if the corresponding diameter of the disc is 120 mm and that of the bore 2 is 28 mm.

With such conditions the maximum track density is 302 tracks per inch.

The excentricity can be reduced substantially by using discs provided with solid centering hubs. Fig. 4 shows such a disc construction. The disc comprises a central disc-shaped hub 5 made of a firm plastic material in which a central guiding bore 6 is tooled with very small tolerances. The bore 6 communicates at its first side with a conical inlet opening 7 and at its other side with a bore 8 of larger diameter. A cylindrical outer surface 9 of the central hub 5 coaxially guides the mounting bore 2 of the disc 1. A clamping ring 5a closely fits to the cylindrical outer surface 9, whereby it keeps the disc 1 in engagement with the central hub 5.

The tests for excentricity have shown that in case of the construction shown in Fig. 4 with an outer disc diameter of 68 mm and with a central bore 2 diameter of 2 mm, the excentricity was better than 6.8 μm. With this excentricity the realizable track density reaches the value of 560 tracks per inch.

By using the present invention the marking information and the useful information can be recorded in one side of the disc, which results in an information storage loss ranging between about 4% and 8%, but it enables the usage of an inexpensive system with a single head in combination with a cheaper only on one side recordable disc-type. In case of using a double-sided information recording system, the present invention provides almost a double information storage capacity compared to conventional systems. The above described realizable tracking density values show that the usual tracking densities used in mini-floppy technique can be used with the present invention, too.

**Claims**

1. An apparatus for fine adjustment of the position of a reading head (10) associated with a flexible magnetic information carrier disc (1) relative to circular information recording tracks (00—03) of the disc, in which each of said tracks has a track-marking portion on which is recorded a marking frequency (f1, f2), said apparatus comprising a circuit selectively responsive to said marking frequency (f1, f2) and coupled to said reading head (10) for providing an output signal proportional to the amplitudes of the marking frequency components of signals read out by said reading head, and a control unit which in response to said output signal adjusts the radial position of said reading head (10), characterised in that the track-marking portion of each track comprises a track-marking sector (3) having at most about 30° angular extent, the frequency value of the frequency of each track-marking sector is distinguishable from that of the frequency recorded on the neighbouring tracks, and the control unit is arranged to adjust the radial position of said reading head (10) while the head is in the track-marking sector (3) to control said output signal to a maximum which is associated with said frequency value of the track to which fine adjustment should be made.

2. An apparatus as claimed in claim 1, in which even-numbered tracks (00, 02) have a first marking frequency (f1), and odd-numbered tracks (01, 03) have a second marking frequency value (f2).

3. An apparatus as claimed in claim 2, in which said first and second marking frequencies correspond respectively to frequencies represented by the "0" bits and "1" bits recorded in the information-carrying sector of said track.

4. An apparatus as claimed in claim 2 or 3, in which said selective circuit comprises a first frequency selector (14) for selecting a first component of said read out signal having said first marking frequency (f1) to provide a first direct current signal proportional to the amplitude of said first component, a second frequency selector (15) for selecting a second component of said read out signal having said second marking frequency (f2) to provide a second direct current signal proportional to the amplitude of said second component, and a first differential amplifier (16) having a pair of inputs coupled to the outputs of said selectors (14, 15) and an output providing a voltage signal (U) representing the difference between said first and second direct current signals.

5. An apparatus as claimed in claim 4, in which said control unit comprises a second differential amplifier (17) having a first input coupled to the output of said first differential amplifier (16), a reference signal forming means (18) having an output coupled to a second input of said second differential amplifier (17) to provide a reference voltage associated with the track to which said reading head (10) is to be adjusted, and a positioning means (12) for adjusting the radial position of said reading head (10) corresponding to the sign and magnitude of the output signal (U') of said second differential amplifier (17).

6. An apparatus as claimed in any preceding claim, in which said reading head (10) is a combined recording and reading head.

7. A method of recording track-marking information on circular tracks (00—03) of a flexible magnetic information-carrying disc (1), comprising the steps of recording information on information-carrying portions of the tracks, and recording a marking frequency (f1, f2) on the remaining track-marking portions (3) of the tracks, characterized in that the information carrying portion of each track comprises an information-carrying sector having an angular extent of at least about 330°, and the track-marking portion of each track comprises a track-marking sector which thus occupies at most about 30° of said track, each track comprising a specific marking frequency distinguishable from the marking frequency of the neighbouring tracks.

8. A method as claimed in claim 7, in which even-numbered tracks (00, 02) have a common first marking frequency (f1), and odd-numbered tracks (01, 03) have a common second marking frequency (f2).

**Patentansprüche**

1. Einrichtung zum Feineinstellen der Position eines Lesekopfes (10), der einer flexiblen magnetischen Informationsträgerplatte (1) zugeordnet ist, relativ zu kreisförmigen Informationsaufzeichnungsspuren (00—03) der Platte, auf welcher jede der Spuren einen Spurmarkierungsabschnitt aufweist, auf welchem eine Markierungsfrequenz (f1, f2) aufgezeichnet ist, wobei die Einrichtung einen mit dem Lesekopf (10) gekoppelten Schaltkreis, der auf die Markierungsfrequenz (f1, f2) selektiv anspricht, zur Erzeugung eines zu den Amplituden der Markierungsfrequenzkomponenten von über den Lesekopf (10) gelesenen Signalen proportionales Ausgangssignals, und eine Steuereinheit aufweist, die in Antwort auf das Ausgangssignal den Lesekopf (10) in dessen radialen Position einstellt, dadurch gekennzeichnet, daß der Spurmarkierungsabschnitt jeder Spur einen Spurmarkierungssektor (3) aufweist, der sich über einen Winkel von höchstens etwa 30° hin erstreckt, daß der Frequenzwert der Frequenz jedes Spurmarkierungssektors von demjenigen der Frequenz der benachbarten Spurmarkierungssektoren (3) unterscheidbar ist, und daß die Steuereinheit zur Einstellung der radialen Position des Lesekopfes (10) während dessen Aufenthaltes in dem Spurmarkierungssektor (3) zur Steuerung des Ausgangssignals auf ein der Frequenz der Spur für welche Feineinstellung durchzuführen ist, entsprechendes Maximum eingerichtet ist.

2. Einrichtung nach Anspruch 1, in welcher geradzahlig numerierte Spuren (00, 02) eine erste Markierungsfrequenz (f1), und ungeradzahlig numerierte Spuren (01, 03) einen zweiten Markierungsfrequenzwert (f2) aufweisen.

3. Einrichtung nach Anspruch 2, in welcher die erste und zweite Markierungsfrequenz Frequenzen entsprechen, die von den "0"-Bits und "1"-Bits dargestellt sind, die in dem informationstragenden Abschnitt der Spur aufgezeichnet, sind.

4. Einrichtung nach Anspruch 2 oder 3, in welcher der selektive Schalkreis einen ersten Frequenzwähler (14) zum Auswählen einer ersten Komponente des ausgelesenen, die erste Markierungsfrequenz (f1) aufweisenden Signal zur Erzeugung eines ersten, zu der Amplitude der ersten Komponente proportionalen Gleichstromsignals, einen zweiten Frequenzwähler (15) zum Auswählen einer zweiten Komponente des ausgelesenen, die te Markierungsfrequenz (f2) aufweisenden Signals zur Erzeugung eines zweiten, zu der Amplitude der zweiten Komponente proportionalen Gleichstromsignals, und einen ersten Differenzverstärker (16) mit zwei Eingängen, die mit den Ausgängen der Wähler (14, 15) verbunden sind, und einem Ausgang zur Erzeugung eines der Differenz zwischen dem ersten und dem zweiten Gleichstromsignal entsprechenden Spannungssignals (U), aufweist.

5. Einrichtung nach Anspruch 4, in welcher die Steuereinheit einen zweiten Differenzverstärker (17), dessen erster Eingang mit dem Ausgang des ersten Differenzverstärkers (16) verbunden ist, einen Referenzsignalschaltkreis (18), dessen Ausgang an einen zweiten Eingang des zweiten Differenzverstärkers (17) zur Erzeugung einer der Spur, auf welche der Lesekopf einzustellen ist, zugeordneten Referenzspannung angeschlossen ist, und eine Positionierungsvorrichtung zum Einstellen der radialen Position des Lesekopfes (10) entsprechend dem Vorzeichen und der Größe des Ausgangssignals (U') des zweiten Differenzverstärkers (A) aufweist.

6. Einrichtung nach einem der vorangehenden Ansprüche, in welcher der Lesekopf (10) ein kombinierter Aufzeichnungs- und Lesekopf ist.

7. Verfahren zur Aufzeichnung von Spurmarkierungsinformationen auf kreisförmigen Spuren (00—03) einer flexiblen informationstragenden Magnetplatte (1), bei welchem auf die informationstragenden Abschnitte der Spuren Informationen, und auf den verbleibenden Spurmarkierungsteilen (3) der Spuren eine Markierungsfrequenz (f1, f2) aufgezeichnet werden, dadurch gekennzeichnet, daß der informationstragende Abschnitt jeder Spur einen Informationsträgersektor enthält, dessen Winkelerstreckung wenigstens etwa 330° ist, und der Spurmarkierungsteil jeder Spur einen Spurmarkierungssektor aufweist, der somit höchstens etwa 30° der Spur einnimmt, wobei jede Spur eine spezifische Markierungsfrequenz aufweist, die von der Markierungsfrequenz der benachbarten Spuren unterscheidbar ist.

8. Verfahren nach Anspruch 7, in welchem geradzahlig numerierte Spuren (00, 02) ein gemeinsame erste Markierungfrequenz (f1) und ungeradzahlig numerierte Spuren (01, 03) ein gemeinsame zweite Markierungsfrequenz (f1) aufweisen.

**Revendications**

1. Un appareil de réglage précis de la position d'une tête de lecture (10) associée à un disque magnétique souple (1) de support d'informations par rapport à des pistes circulaires d'enregistrement d'informations (00—03) du disque, dans lequel chacune desdites pistes comporte une partie de repérage de piste sur laquelle est enregistrée une fréquence de repérage ($f_1$, $f_2$), ledit appareil comprenant un circuit qui répond sélectivement à ladite fréquence de repérage ($f_1$, $f_2$) et qui est relié à la tête de lecture (10) pour produire un signal de sortie proportionnel aux amplitudes des composantes de fréquence de repérage des signaux lus par ladite tête de lecture, et un dispositif de commande qui assure, en réponse audit signal de sortie, un réglage de la position de ladite tête de lecture (10), caractérisé en ce que la partie de repérage de piste de chaque piste comprend un secteur de repérage de piste (3) ayant une étendue angulaire atteignant au maximum environ 30°, la valeur de fréquence de la fréquence de chaque secteur de repérage de piste étant sensiblement différente de celle de la fréquence enregistrée sur les pistes voisines, cependant que le dispositif de commande est agencé pour régler la position radiale de ladite tête de lecture (10) pendant que la tête se trouve dans le secteur de repérage de piste (3) afin de faire passer ledit signal de sortie à un maximum qui est associé à ladite valeur de fréquence de la piste à soumettre à un réglage précis.

2. Un appareil tel que revendiqué dans la revendication 1, dans lequel des pistes de numéros pairs (00, 02) comportent une première fréquence de repérafe (f₁), et des pistes de numéros impairs (01, 03) comportent une seconde fréquence de repérage (f₂).

3. Un appareil tel que revendiqué dans la revendication 2, dans lequel lesdites première et seconde fréquences de repérage correspondent respectivement à des fréquences représentées par les bits "0" et les bits "1" enregistrés dans le secteur de support d'informations de ladite piste.

4. Un appareil tel que revendiqué dans la revendication 2 ou 3, dans lequel ledit circuit de sélection comprend un premier sélecteur de fréquence (14) pour sélectionner une première composante dudit signal de sortie ayant ladite première fréquence de repérage (f₁) afin de produire un premier signal de courant continu proportionnel à l'amplitude de ladite première composante, un second sélecteur de fréquence (15) pour sélectionner une seconde composante dudit signal de lecture ayant ladite seconde fréquence de repérage (f₂) afin de produire un second signal de courant continu proportionnel à l'amplitude de ladite seconde composante, et un premier amplificateur différentiel (16) comportant deux entrées reliées aux sorties desdits sélecteurs (14, 15) et une sortie produisant un signal de tension (U) représentant la différence entre lesdits premier et second signaux de courant continu.

5. Un appareil tel que revendiqué dans la revendication 4, dans lequel ledit dispositif de commande comprend un second amplificateur différentiel (17) comportant une première entrée reliée à la sortie dudit premier amplificateur différentiel (16), un moyen générateur de signal de référence (18) comportant une sortie reliée à une seconde entrée dudit second amplicateur différentiel (17) de façon à produire une tension de référence associée à la piste sur laquelle ladite tête de lecture (10) doit être réglée, et un moyen de positionnement (12) pour régler la position radiale de ladite tête de lecture (10) en correspondance à l'amplitude et au signe du signal de sortie (U') dudit second amplificateur différentiel (17).

7. Un appareil tel que revendiqué dans l'une quelconque des revendications précédentes, dans lequel ladite tête de lecture (10) est une tête combinée d'enregistrement et de lecture.

7. Un procédé d'enregistrement d'information de repérage de piste sur des pistes circulaires (00—03) d'un disque magnétique souple (1) de support d'informations, comprenant les étapes consistant à enregistrer une information sur des parties de support d'informations des pistes, et à enregistrer une fréquence de repérage (f₁, f₂) sur les parties restantes de repérage de piste (3) des pistes, caractérisé en ce que la partie de support d'informations de chaque piste comprend un secteur de support d'informations ayant une étendue angulaire d'au moins environ 330°, et la partie de repérage de piste de chaque piste comprend un secteur de repérage de piste qui occupe par conséquent au maximum environ 30° de ladite piste, chaque piste comprenant une fréquence de repérage spécifique sensiblement différente de la fréquence de repérage des pistes voisines.

8. Un procédé tel que revendiqué dans la revendication 7, dans lequel des pistes de numéros pairs (00, 02) comportent une première fréquence de repérage commune (f₁) et des pistes de numéros impairs (01, 03) comportent une seconde fréquence de repérage commune (f₂).

0 057 178

Fig.1

Fig. 4

1

Fig. 2

$$U = |U_{f_1}| - |U_{f_2}|$$

Fig. 3